# EUROPÄISCHE PATENTANMELDUNG

(11) **EP 2 289 741 A2**
(43) Veröffentlichungstag der Anmeldung: **02.03.2011**
(21) Anmeldenummer: 10008632.1
(22) Anmeldetag: 19.08.2010
(51) Int. Cl.: B60S 1/08

(54) **Scheibenwischanlage für eine Fahrzeugkabine**

(30) Priorität: 28.08.2009 DE 202009011633 U
(71) Anmelder: Noell Mobile Systems GmbH, 97080 Würzburg (DE)
(72) Erfinder: Müller, Conrad Dipl.-Ing., 97299 Zell am Main (DE)
(74) Vertreter: Hofmann, Matthias

(57) **Zusammenfassung**

Die Erfindung betrifft eine Scheibenwischeranlage für eine Fahrzeugkabine, insbesondere für die Fahrzeugkabine eines Portalstaplers, bestehend aus zwei Antriebsmotoren, an denen Scheibenwischer zum Reinigen einer weitestgehend rechteckigen Fläche angeordnet sind, bei der zwei diagonal im Bereich der Ecken der zu wischenden Fläche (1) angeordneten Achsen (4) der Motoren, an denen ein Wischerarm (2) und an einem Gelenk (5) Wischerblätter (3) angeordnet sind, wobei die Wischbewegung der Wischerblätter (3) von einer Stellung weitestgehend parallel von einer Seite der zu wischenden Fläche (1) bis weitestgehend parallel zur anderen Seite der zu wischenden Fläche (1) geführt wird.

Die Lösung hat den Vorteil, daß die Scheiben von Fahrzeugkabinen mit weitestgehend rechteckigen Flächen über ihre gesamte Sichtfläche bei schwierigen Witterungsverhältnissen jederzeit von Verschmutzungen freigehalten werden können, so daß das Bedienpersonal die Möglichkeit hat, alle um die Kabine stattfindenden Aktivitäten einzusehen, ohne ungünstige Stellungen gegenüber der Bedienapparatur einnehmen zu müssen.

## Beschreibung

Die Erfindung betrifft eine Scheibenwischanlage für eine Fahrzeugkabine mit weitestgehend rechteckigen Flächen, insbesondere für eine Fahrzeugkabine für einen Portalstapler.

Die Erfindung ist überall dort anwendbar, wo rechteckige Flächen von Kabinen, insbesondere von Fahrzeugkabinen, möglichst vollständig gereinigt werden müssen, d. h. von einer Seite der rechteckigen Scheibe bis zur anderen Seite, so daß das Bedienpersonal oder der Fahrzeugführer die unterhalb und oberhalb der Kabine vorhandenen Räume auch bei schwierigen Witterungsverhältnissen einwandfrei einsehen kann.

Fahrzeugkabinen von Portalstaplern sind so angeordnet, daß das Bedienpersonal oder der Fahrer die unterhalb, oberhalb oder in gleicher Höhe der Kabine befindlichen Räume immer gut und deutlich einsehen kann, da Container erfaßt, abgesetzt und zum Teil mit hoher Geschwindigkeit zwischen Containerstapeln verfahren werden müssen. Stellflächen für Container in Häfen weisen zum Teil staubigen Untergrund auf, so daß es zu einem Schmutzbelag auf den Scheiben der Kabinen kommt. Zum anderen herrschen besonders in Hafenanlagen häufig ungünstige Witterungsbedingungen mit Sturm und Regenfällen. Dadurch kommt es häufig zur Verschmutzung der Scheiben der Fahrzeugkabinen, die bei laufendem Betrieb gereinigt werden müssen. Das ist nur durch Scheibenwischeranlagen möglich, da die Kabinen häufig in erheblicher Höhe über dem Boden am Fahrzeug angeordnet sind. Da die gesamte Fläche der Scheibe aus Sicherheitsgründen vom Fahrzeugführer durchblickt werden muß, besteht die Forderung, eine Scheibenwischeranlage anzuordnen, die die Scheibe möglichst vollständig reinigt.

DE 3 415 614 C2, welches 2 parallel angeordnete Wischer beschreibt, die über eine Mechanik miteinander verbunden sind.

EP 1 824 413 B1 beschreibt eine Scheibenwischeranlage für Fahrzeuge, insbesondere für Kraftfahrzeuge, bei der zwei Wischeranlagen durch eine Antriebsstange miteinander verbunden sind, wobei nur ein einziger Antrieb über eine Wischerstange zwei Wischer betätigt.

EP 69406055 *T2* beschreibt eine von einem Motor angetriebene, gegenläufige Scheibenwischeranlage, die zwei Scheibenwischer aufweist. Diese sind mittels einer Verbindungsstange und einem Zwischenhebel so miteinander verbunden, daß die Drehbewegung eines Kurbelarmes eine Hin-und-Her-Bewegung der beiden Wischerarme zur Folge hat.

DE 10 2005 01 5038 A1 1 beschreibt einen Scheibenwischer für Panoramascheiben eines Fahrzeuges der an seiner Befestigung eine Schwenkachse aufweist, so daß die zu wischende Fläche von einer Seite bis zur anderen Seite gewischt werden kann, wobei das Wischerblatt weitgehend parallel zur Wischerachse schwenkbar gelagert ist.

US 3 044 095 ist gekennzeichnet dadurch, daß die beiden Scheibenwischer auf zwei gegenüberliegenden rotierenden Achsen angeordnet sind, die mittels eines Verbindungsstückes, welches die beiden rotierenden Achsen antreibt, eine kreisförmige Wischbewegung der Wischerarme auslösen.

Mit den beschriebenen Scheibenwischeranlagen ist es jedoch nicht möglich, eine weitestgehend rechteckige Fläche einer Scheibe einer Fahrzeugkabine so zu reinigen, daß der Fahrzeugführer eine weitestgehend vollständig saubere Fläche durchblicken kann.

Daher ist es Aufgabe der Erfindung, eine Scheibenwischeranlage zu entwickeln, mit der weitestgehend rechteckige Flächen einer Fahrerkabine reinigbar sind.

Diese Aufgabe wird durch einen Scheibenwischer nach den Merkmalen des ersten Anspruches gelöst.

Unteransprüche geben vorteilhafte Ausgestaltungen der Erfindung wieder.

Die erfindungsgemäße Lösung sieht eine Scheibenwischeranlage für eine Fahrzeugkabine vor, die aus zwei Antriebsmotoren besteht, an denen Scheibenwischer zum Reinigen einer weitestgehend rechteckigen Fläche angeordnet sind. Die Antriebsmotoren und damit die Drehachse der Scheibenwischer sind diagonal im Bereich der Ecken der zu wischenden Flächen angeordnet, wobei die Scheibenwischer aus einem Arm und Gelenk für das Wischerblatt bestehen. Vorteilhafterweise sind die Achsen der Antriebe für die Wischer im Wesentlichen diagonal gegenüberliegend unter- und oberhalb der zu wischenden rechteckigen Fläche angeordnet.

Die Wischbewegung der Wischerblätter wird von einer Stellung weitestgehend parallel von der einen Seite der Wischerfläche bis weitestgehend parallel zu anderen Seite der Wischerfläche ausgeführt. Die Wischerbewegung der beiden Wischerblätter wird nacheinander ausgeführt, so daß sich die Wischerblätter nicht gegenseitig behindern. Da der Fahrzeugführer eines Portalstaplers nach allen Seiten zu jeder Zeit gute Sicht benötigt, ist es von Vorteil an jeder Seite der Kabine die erfindungsgemäße Scheibenwischeranlage anzuordnen.

Weiterhin ist es vorteilhaft, Sprühdüsen für eine Scheibenwaschflüssigkeit an geeigneten Stellen um die zu wischende Fläche anzuordnen. Als geeignete Stellen kommen grundsätzlich Punkte im Rahmen um die zu wischende Fläche in Frage. Aufgrund der Größe der Fläche ist es vorteilhaft, mehrere Sprühdüsen anzuordnen. Als vorteilhaft hat es sich erwiesen, die Sprühdüsen oberhalb und/oder unterhalb der zu wischenden Fläche anzuordnen oder aber die Sprühdüsen direkt an den Achsen für die Wischerarme zu installieren.
Ebenso vorteilhaft ist es, die Sprühflüssigkeit mittels Schlauch oder einer anderen geeigneten Zuführeinrichtung in den Wischerarm oder das Wischerblatt zu führen und mindestens eine oder mehrere Sprühdüsen im Wischerarm oder/und direkt am Wischerblatt anzuordnen. Die Sprühdüsen können so angeordnet sein, daß der Sprühstrahl in Wischrichtung abgegeben wird.

Sofern die Sprühdüsen oberhalb und unterhalb der zu wischenden Fläche angeordnet sind, hat es sich als vorteilhaft erwiesen, jeweils drei Sprühdüsen an der zu wischenden Fläche anzuordnen. Sollte die Anordnung der drei Sprühdüsen nebeneinander erfolgen, sind deren Sprühwinkel so zu wählen, daß die gesamte zu wischende Fläche durch den Sprühstrahl benetzt wird.

Weiterhin ist es vorteilhaft, die Funktion der Sprühdüsen mit der Stellung der Wischerblätter zu synchronisieren, und zwar in der Weise, daß ein Sprühstrahl dann auf die zu wischende Fläche trifft, wenn die Wischerblätter sich jeweils in einer Stellung parallel zur Seite der zu wischenden Fläche befinden.
Im Folgenden wird die Lösung an vier Figuren und einem Ausführungsbeispiel erläutert. Die Figurenzeigen:
- Figur 1:: Erfindungsgemäße Scheibenwischanlage mit Sprühdüsen im oberen Rahmenteil der Kabine
- Figur 2:: Erfindungsgemäße Scheibenwischanlage mit Sprühdüsen an den Achsen der Wischerblätter
- Figur 3:: Erfindungsgemäße Scheibenwischanlage mit Sprühdüsen oberhalb und unterhalb der zu wischenden Fläche
- Figur 4:: Erfindungsgemäße Scheibenwischanlage mit drei Sprühdüsen im Abstand oberhalb und unterhalb der zu wischenden Fläche.
- Figur 5:: Scheibenwischanlage mit Sprühdüsen am Wischerarm

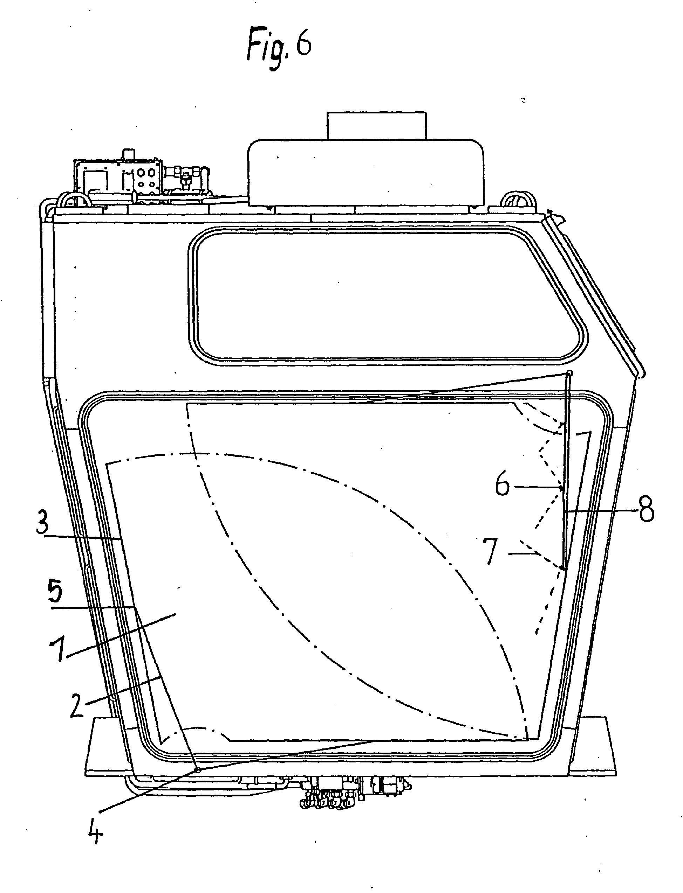

- Figur 6:: Scheibenwischanlage mit Sprühdüsen am Wischerblatt
- Figur 7:: Wischerblatt mit daran angeordneter Sprühdüse im Detail.

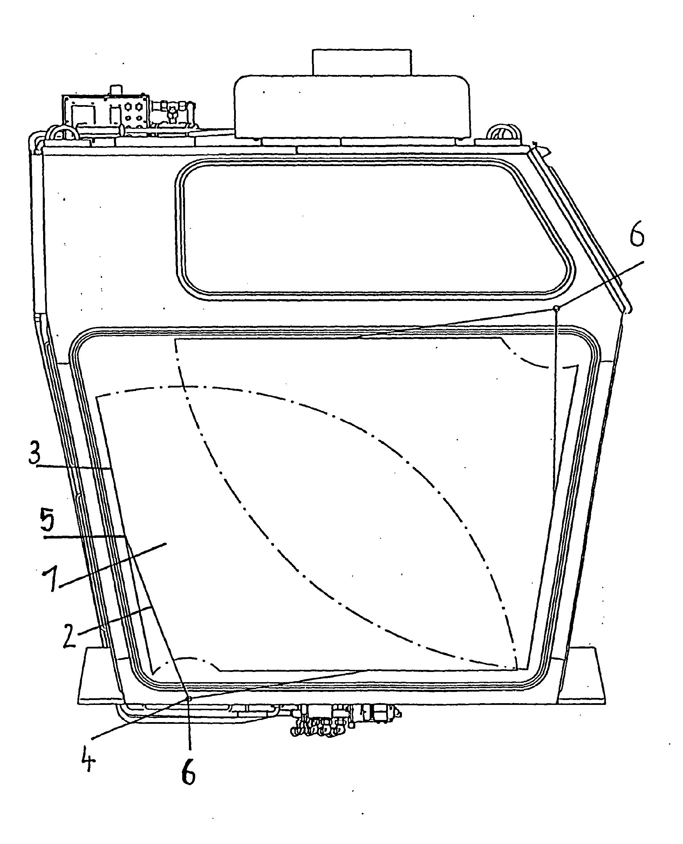

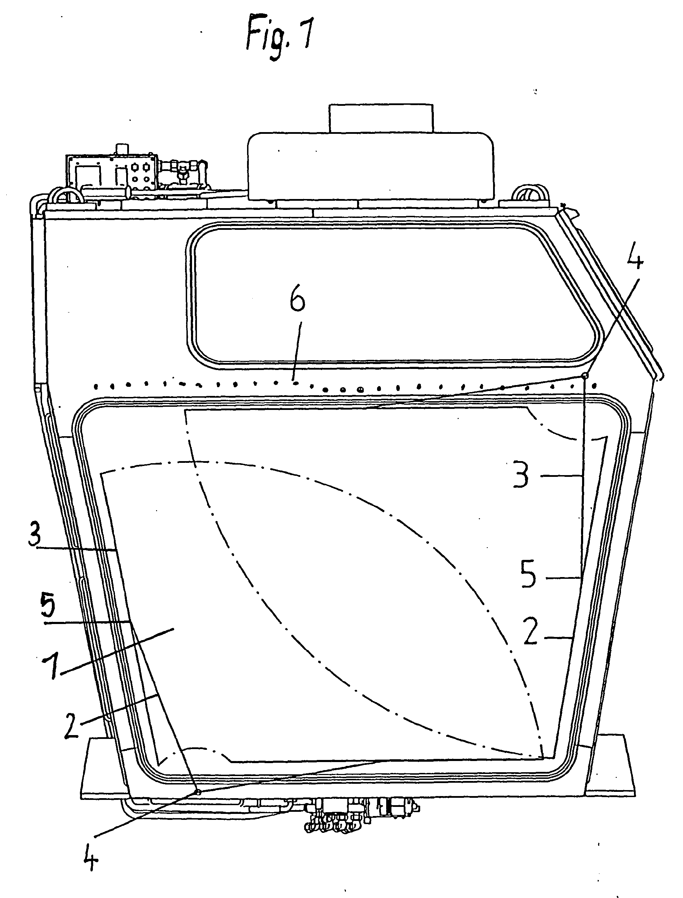

Die *Figur 1* zeigt die Fahrerkabine eines Portalstaplers, deren Scheibe 1 eine weitestgehend rechteckige Fläche aufweist, wobei die Achsen 4 der Antriebsmotoren diagonal gegenüberliegend angeordnet sind und sich oberhalb oder unterhalb der weitestgehend rechteckigen Fläche der Scheibe 1 befinden. Jedes Wischerblatt 3 ist über ein Gelenk 5 mit dem Wischerarm 2, der weitgehend gerade ist, verbunden und wischt parallel von jeweils einer Seite der zu wischen Fläche 1 der Scheibe zur jeweils orthogonal an diese angrenzende andere Seite der zu wischenden Fläche der Scheibe 1, so daß durch die Überlagerung des Wischbereiches beider Scheibenwischer die Fläche der Scheibe weitestgehend vollständig gereinigt werden kann, so daß der Fahrzeugführer oder Fahrer freie Sichtflächen hat. Zur besseren Reinigung der Scheibe 1 sind oberhalb der zu reinigenden Fläche Sprühdüsen 6 angeordnet.

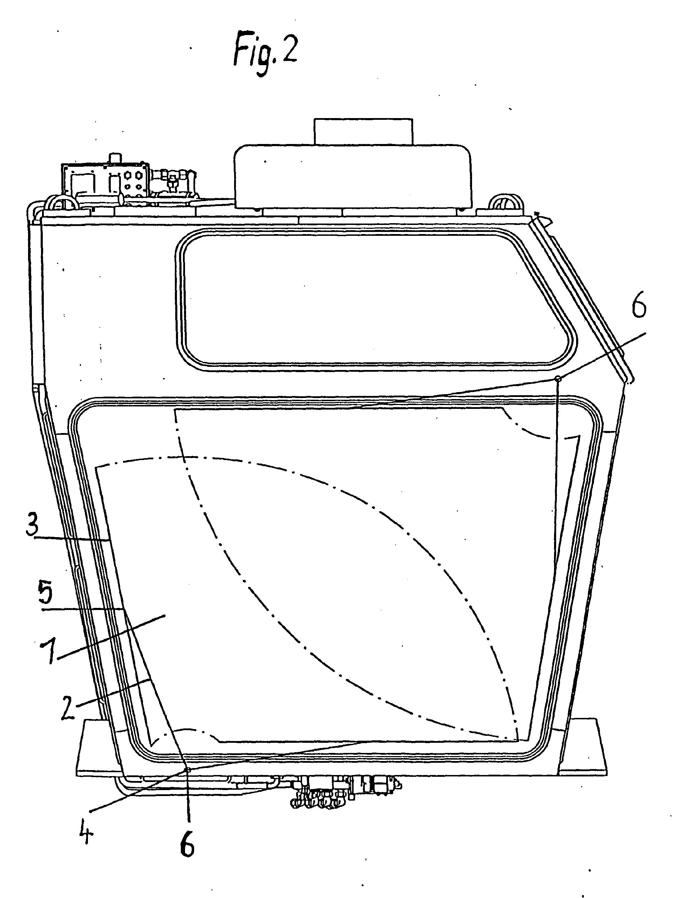

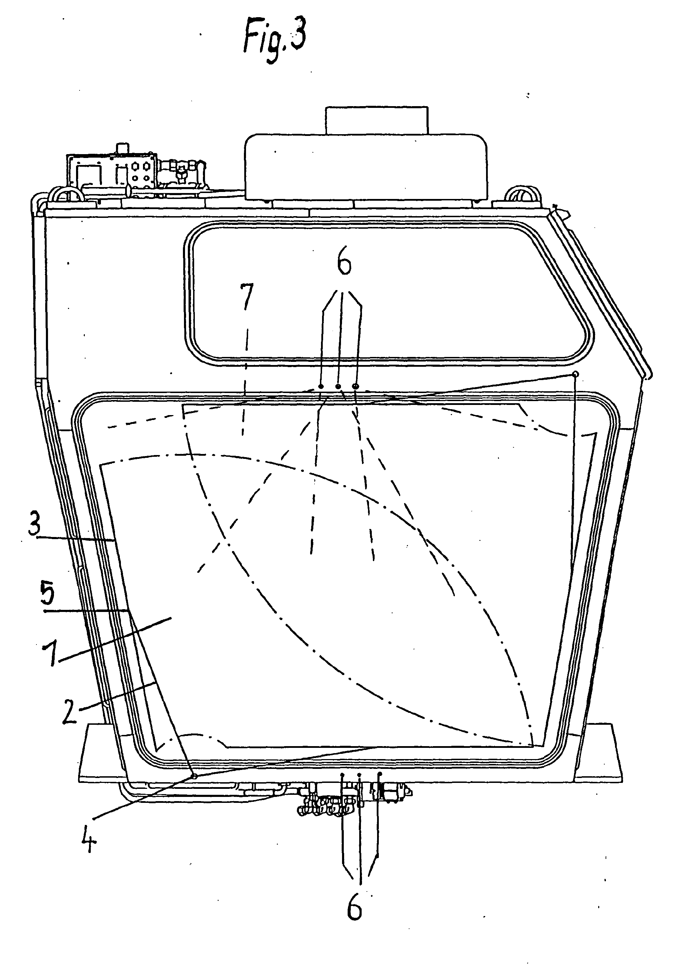

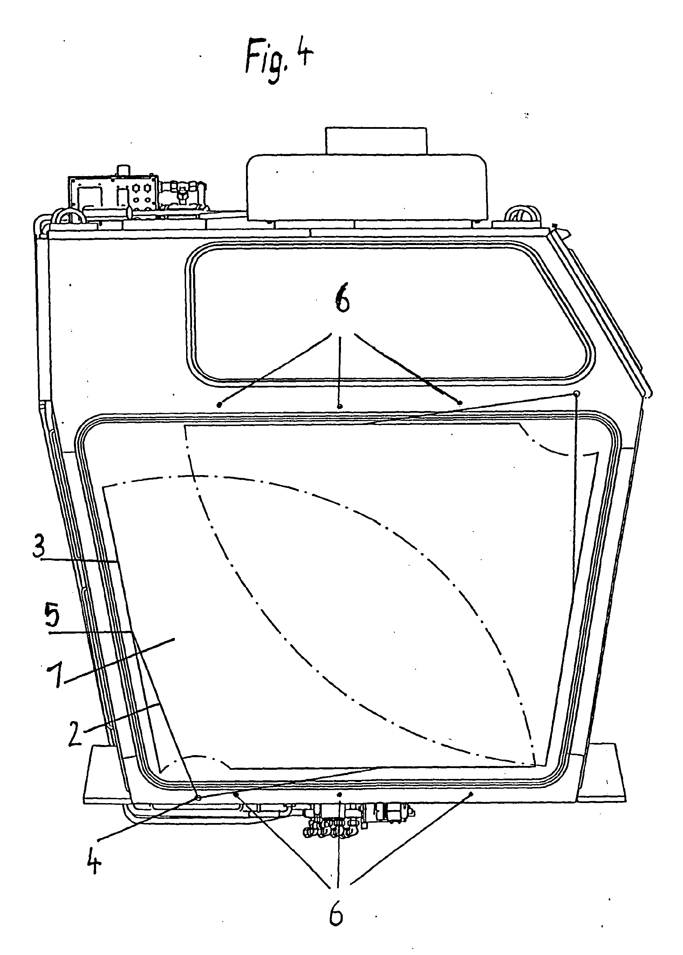

Die *Figur 2* zeigt die erfindungsgemäße Scheibenwischanlage von Figur 1, bei der die Sprühdüsen 6 an den Achsen 4 für die Wischarme 2 angeordnet sind. Da die zu wischende Fläche 1 bis zu 4 qm groß sein kann, hat es sich als vorteilhaft erwiesen, weitere Sprühdüsen anzuordnen, wie das beispielsweise den Figuren 3 und 4 zu entnehmen ist.

Sofern die Sprühdüsen 6 nebeneinander angeordnet sind, wie da die *Figur 3* zeigt, ist deren Sprühstrahl 7 vorteilhaft in einem Winkel einzustellen, der es ermöglicht, die gesamte zu wischende Fläche 1 zu besprühen.

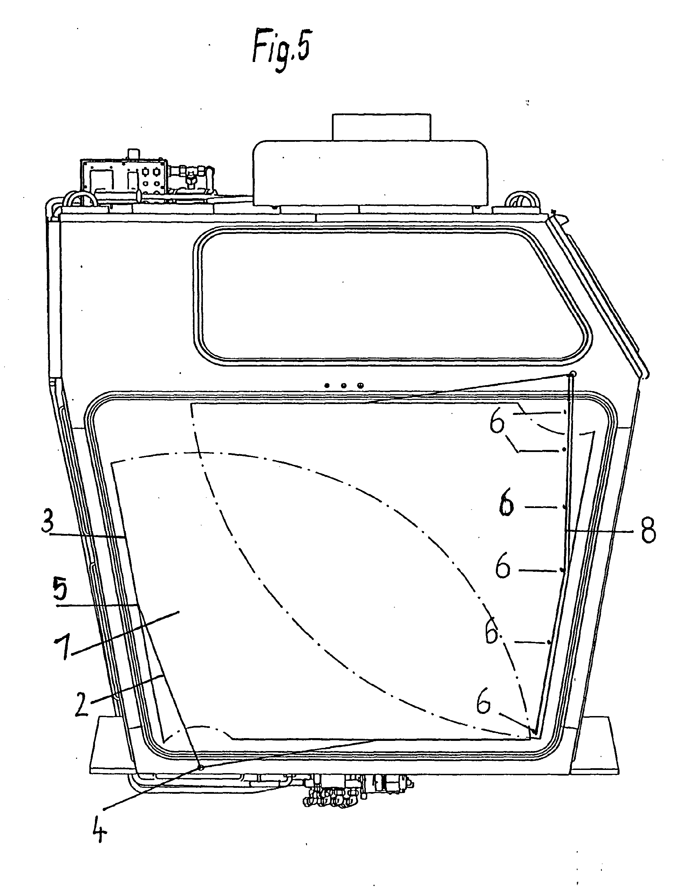

Die *Figur 5* zeigt die Fahrerkabine eines Portalstaplers mit der erfindungsgemäßen Scheibenwischeranlage, bei der ein Schlauch 8 in den Wischerarm 2 führt oder an diesem befestigt ist, wobei im Schlauch 8 Sprühdüsen 6 angeordnet sind.

Eine andere Möglichkeit besteht darin, diesen Schlauch 8 zum Wischerblatt 3 weiterzuführen, so daß Sprühdüsen 6 sowohl am Wischerblatt 3 als auch am Wischerarm 2 angeordnet sein können.

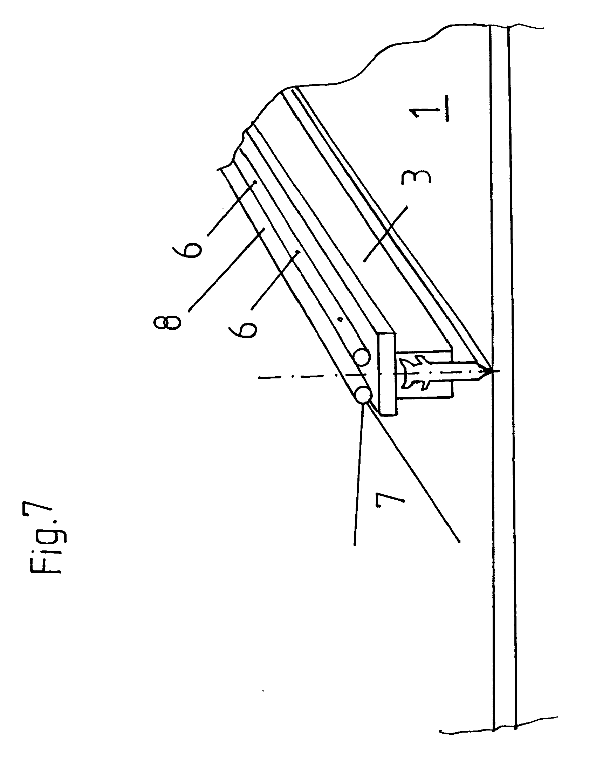

Die *Figur 7* zeigt, wie zwei Schläuche 8 mit Sprühdüsen 6 am Wischerblatt 3 angeordnet sind.

Die vorgeschlagene Lösung hat den Vorteil, daß die Scheiben von Fahrzeugkabinen mit weitestgehend rechteckigen Flächen über ihre gesamte Sichtfläche bei schwierigen Witterungsverhältnissen jederzeit von Verschmutzungen freigehalten werden können, so daß das Bedienpersonal die Möglichkeit hat, alle um die Kabine herum stattfindenden Aktivitäten einzusehen, ohne daß das Fahrpersonal ungünstige Stellungen gegenüber seiner Bedienapparatur einnehmen muß.

## Patentansprüche

1. Scheibenwischeranlage für eine Fahrzeugkabine, insbesondere für die Fahrzeugkabine eines Portalstaplers, bestehend aus zwei Antriebsmotoren, an denen Scheibenwischer zum Reinigen einer weitestgehend rechteckigen Fläche angeordnet sind, **gekennzeichnet durch**
- zwei diagonal im Bereich der Ecken der zu wischenden Fläche (1) angeordneten Achsen (4) der Motoren, an denen ein Wischerarm (2) und an einem Gelenk (5) Wischerblätter (3) angeordnet sind,
- wobei die Wischbewegung der Wischerblätter (3) von einer Stellung weitestgehend parallel von einer Seite der zu wischenden Fläche (1) bis weitestgehend parallel zur anderen Seite der zu wischenden Fläche (1) geführt wird.

2. Scheibenwischeranlage nach Anspruch 1, **dadurch gekennzeichnet, daß** die Wischbewegungen der beiden Wischerblätter (3) nacheinander ausgeführt werden.

3. Scheibenwischeranlage nach den Ansprüchen 1 und 2, **gekennzeichnet durch** einen weitestgehend geraden Arm (2) eines jeden Wischerblattes (3).

4. Scheibenwischeranlage nach den Ansprüchen 1 bis 3, **dadurch gekennzeichnet, daß** die Achsen (4) der Antriebe zu den Armen (2) der Wischerblätter (3) jeweils diagonal gegenüberliegend unterhalb und oberhalb der zu wischenden Fläche (1) angeordnet sind.

5. Scheibenwischeranlage nach den Ansprüchen 1 bis 4, **dadurch gekennzeichnet, daß** unterhalb oder/und oberhalb der zu wischenden Fläche (1) mindestens eine Sprühdüse (6) für eine Scheibenwaschflüssigkeit angeordnet ist.

6. Scheibenwischanlage nach Anspruch 5, **dadurch gekennzeichnet, daß** die Sprühdüse (6) in etwa an der Achse (4) vor dem Wischerarm (2) angeordnet ist.

7. Scheibenwischanlage nach Anspruch 5, **dadurch gekennzeichnet, daß** mindestens drei Sprühdüsen (6) an jeder zu wischenden Fläche (1) angeordnet ist.

8. Scheibenwischanlage nach Anspruch 4, **dadurch gekennzeichnet, daß** mindestens eine Sprühdüse (6) am oder im Wischerblatt (3) oder/und am oder im Wischerarm (2) angeordnet ist.

9. Scheibenwischanlage nach den Ansprüchen 1 bis 8, **gekennzeichnet durch** einen Sprühstrahl (7) der Sprühdüsen (6) der mit dem Wischerblatt (3) so synchronisiert ist, daß der Sprühstrahl (7) nur dann auf die zu sprühende Fläche (1) abgegeben wird, wenn sich das Wischerblatt (3) in einer Stellung parallel zur Seite der zu wischenden Fläche befindet.

10. Scheibenwischanlage nach Anspruch 8, **gekennzeichnet durch** einen Sprühwinkel des Wischerstrahls (7), der die Scheibenwischflüssigkeit aus der Sprühdüse (6) über die gesamte zu wischende Fläche (1) versprüht.
